Europäisches Patentamt

European Patent Office

Office européen des brevets

(19)

(11) Publication number: 0 384 357 A2

# EUROPEAN PATENT APPLICATION

(21) Application number: 90103160.9

(22) Date of filing: 19.02.90

(51) Int. Cl.5. G06F 9/445

(30) Priority: 22.02.89 JP 42765/89

(43) Date of publication of application:
29.08.90 Bulletin 90/35

(84) Designated Contracting States:
AT BE CH DE DK ES FR GB GR IT LI NL SE

(71) Applicant: OMRON CORPORATION
10, Tsuchido-cho Hanazono Ukyo-ku
Kyoto 616(JP)

(72) Inventor: Hisada, Hiroshi, c/o Omron
Corporation
Intellectual Property Center, 20, Igadera
Shimokaiinji, Nagaokakyo-shi, Kyoto 617(JP)

Inventor: Nakashima, Toyoshiro, c/o Omron
Corporation
Intellectual Property Center, 20, Igadera
Shimokaiinji, Nagaokakyo-shi, Kyoto 617(JP)
Inventor: Kamon, Kihachi, c/o Omron
Software Co. Ltd.
678, Chozumizu-cho, Takoyakushi-sagaru
Karasuma-douri, Nakagyo-ku,
Kyoto-shi/fu(JP)

(74) Representative: WILHELMS, KILIAN &
PARTNER Patentanwälte
Eduard-Schmid-Strasse 2
D-8000 München 90(DE)

(54) Method of changing object program.

(57) To simply change a part of an object program including plural program modules stored in a RAM in a credit authorization terminal (CAT), for instance, a new program module is written in the RAM from outside and further an address of the new module to be jumped is written in a table for enabling a new module address designation. Further, when an object program and the table for designating addresses of modules to be jumped are both stored in a ROM, the table for designating the addresses of modules is once transferred in the RAM, whenever power supply is turned on. A new program module is loaded into the RAM and address thereof is also loaded in the table transferred in the RAM.

Fig. la

# METHOD OF CHANGING OBJECT PROGRAM

## BACKGROUND OF THE INVENTION

### Field of the Invention

The present invention relates to a method of changing an object program, which is suitable for use in credit authorization terminals (referred to as CAT, hereinafter), and more specifically to a method of changing from outside any given modules of an object program stored in a RAM or a ROM incorporated in the CAT.

### Description of the Prior Art

As an example of transaction processing systems based upon credit cards, CATs are now widely used. A CAT includes a RAM or a ROM for storing an object program composed of plural program modules in order to execute transaction processing based upon credit cards. A CAT in which an object program is mainly stored in a ROM is called ROM machine, while a CAT in which an object program is mainly stored in a RAM is called RAM machine. A CPU incorporated in the CAT executes various necessary processings in accordance with the object program stored or loaded in the ROM or the RAM in communication with a host computer.

In the above-mentioned CAT, there exist the cases where it is necessary to change a part of transaction form. In this case, a new object program is transferred from the host computer to the CAT via a communication line and then loaded in the RAM of the CAT. In the prior-art object program changing method, however, even when only a part of the object program is required to be changed, since the entire object program must be loaded into the RAM, there exists a problem in that it takes a long time to change the object program, so that the time when the communication line is occupied becomes long and therefore the communication cost is high.

In the ROM machine in which the object program is stored in a ROM, on the other hand, it is impossible to load a new object program transferred from the host computer. Therefore, there exists a problem in that the ROM must be exchanged with another one even when a part of transaction form is modified, so that much labor has been needed.

## SUMMARY OF THE INVENTION

With these problems in mind, therefore, it is the primary object of the present invention to provide a method of changing only a part of an object program simply from outside in a CAT in which an object program is stored in a RAM or ROM.

In the first aspect of the present invention, a method of changing an object program, to change any given program module from outside, when an object program including a plurality of modules is loaded in a RAM, comprises the steps of: (a) preparing in the RAM a table for storing addresses of the modules to be jumped; (b) writing a new module at the RAM, instead of an old module written in the same RAM, whenever the new module to be changed is inputted from outside; and (c) writing an address of the new module to be jumped in the table of the RAM.

In the first aspect of the present invention, when a new module to be changed is inputted from the outside, a new module is written in the RAM instead of an old module, and further an address of the new module to be jumped is written in the table. Therefore, it is possible to designate the new module address on the basis of the table.

In the second aspect of the present invention, a method of changing an object program, to change any given module from outside, when an object program including a plurality of modules and a table for designating addresses of the modules to be jumped are stored in a ROM, comprises the steps of: (a) preparing a RAM having a first area for loading the same table as in the table loaded in the ROM and a second area for loading a new module; (b) transferring contents stored in the table of the ROM to the first area of the RAM, whenever power is turned on; (c) designating an address of a module loaded in the ROM on the basis of the transferred table stored in the RAM; (d) loading a new module in the second area of the RAM, whenever the new module to be changed is inputted from outside; and (e) loading the table for designating an address of the new module to be jumped into the first area of the RAM.

In the second aspect of the present invention, the table in the ROM is transferred to the table of the RAM, and the address of the module loaded in the ROM is designated on the basis of the table transferred to the RAM. When a new module to be changed is inputted from outside, the new module is stored in the RAM and further the table for designating an address of the new module to be jumped is stored in the memory area of the RAM.

BRIEF DESCRIPTION OF THE DRAWINGS

Figs. 1a, 1b and 1c are flowcharts for assistance in explaining an embodiment of the present invention;

Fig. 2 is a schematic block diagram showing a CAT to which an embodiment of the present invention is applied;

Fig. 3a is a table for assistance in explaining program modules stored in a ROM; and

Fig. 3b is a table for assistance in explaining program modules stored in a RAM.

DETAILED DESCRIPTION OF PREFERRED EMBODIMENTS

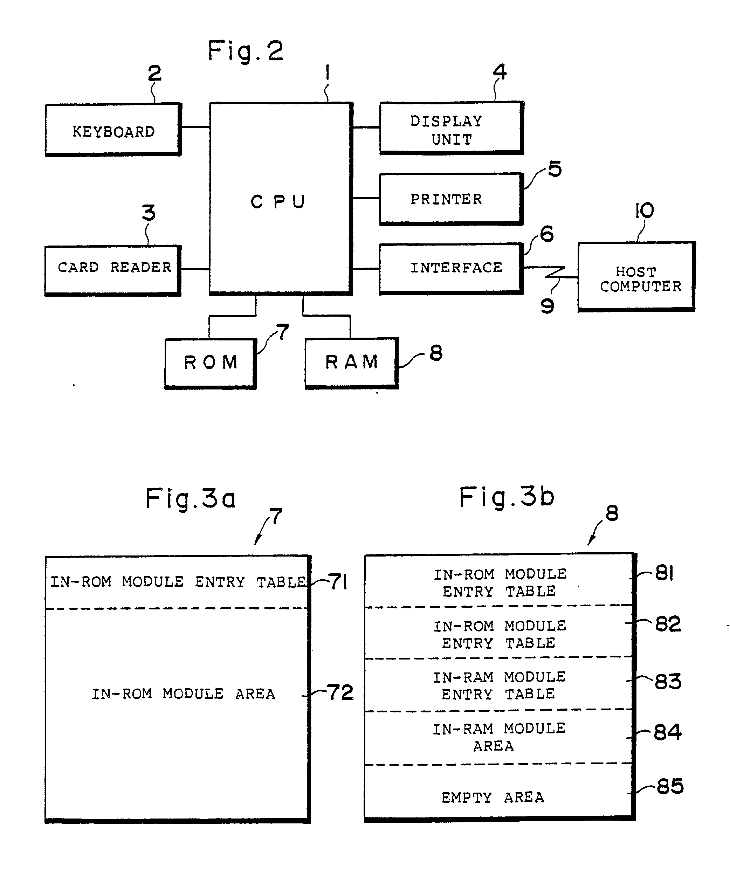

Fig. 2 is a schematic block diagram showing a CAT (card authorization terminal) to which an embodiment of the present invention is applied. Figs. 3a and 3b show program modules stored in a ROM and a RAM. An embodiment according to the present invention will be explained with reference to these drawings. In Fig. 2, a CPU 1 is provided for executing various processing operations of the CAT. A keyboard 2, a card reader 3, a display unit 4, a printer 5, a communication interface 6, a ROM 7 and a RAM 8 are all connected to the CPU 1. The keyboard 2 is provided for entering various data required for transaction processing. The card reader 3 is provided for reading data recorded on a credit card. The display unit 4 displays various data. The printer 5 is provided for printing various data. The communication interface 6 is provided for transferring data between the CPU 1 and the host computer 10 via a communication line 9.

The ROM 7 is provided for storing programs necessary to initialize and operate the CPU 1. As shown in Fig. 3a, in more detail, the ROM 7 includes an area 72 where modules for constituting an object program is stored, and an in-ROM module entry table 71 for designating an address of an in-ROM module stored in the area 72 to be jumped.

The RAM 8 is provided for storing various data and includes plural areas from 81 to 85 as shown in Fig. 3b. The area 81 is provided for copying an in-ROM module entry table 71 stored in the ROM 7. The area 82 stores also an in-ROM module entry table for indicating a jump address determined whenever the in-ROM module is changed by the host computer 10. The area 83 stores an in-RAM module entry table for indicating a jump address of a module loaded in an in-RAM module area 84. The area 85 is an empty area and when the in-RAM module of area 84 is changed and if the scale of the changed module is large, the large-scale new in-RAM module is loaded in this empty area 85.

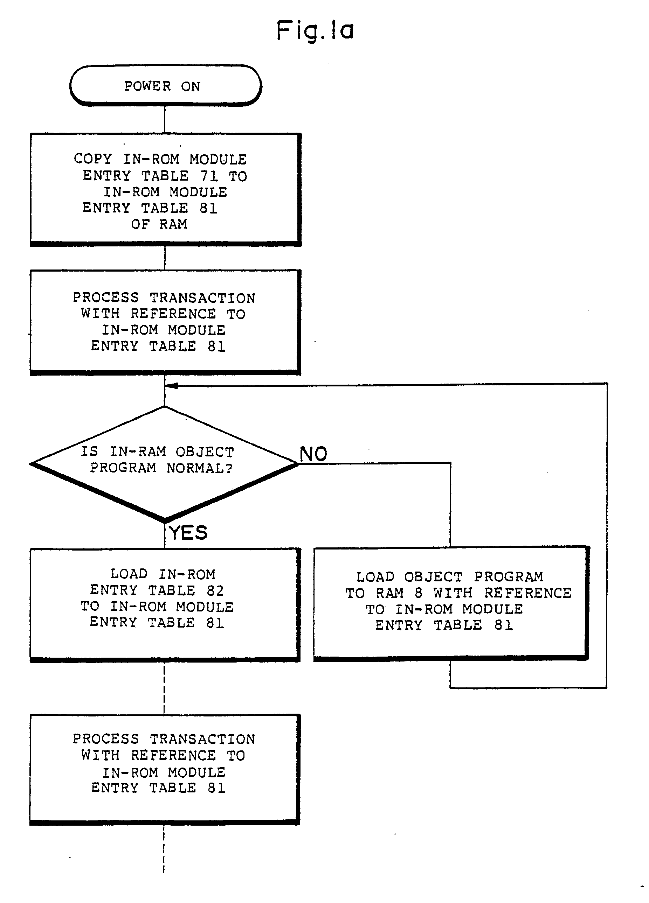

Figs. 1a to 1c show flowcharts for assistance in explaining practical operations of an embodiment according to the present invention. With reference to Fig. 1a, the operation after power has been turned on will be explained. If power is turned on, CPU 1 copy the contents of the in-ROM module entry table 71 of the ROM 7 to the in-ROM module entry table 81 of the RAM 8. Thereafter, CPU 1 executes transaction processing with reference to the in-ROM module entry table 81 copied into the RAM 8. This transaction processing is initialization, for instance. CPU 1 checks whether an object program composed of in-RAM modules 84 loaded in the RAM 8 is normal or not. If NO (abnormal), CPU 1 loads an object program to the RAM 8 with reference to the in-ROM module entry table 81. However, if YES (normal), CPU 1 loads the contents of the in-ROM module entry table 82 to the in-ROM module entry table 81. Thereafter, CPU 1 executes transaction processing by access to the in-ROM module area 72 of the ROM 7 on the basis of the jump address loaded in the in-ROM module entry table 81.

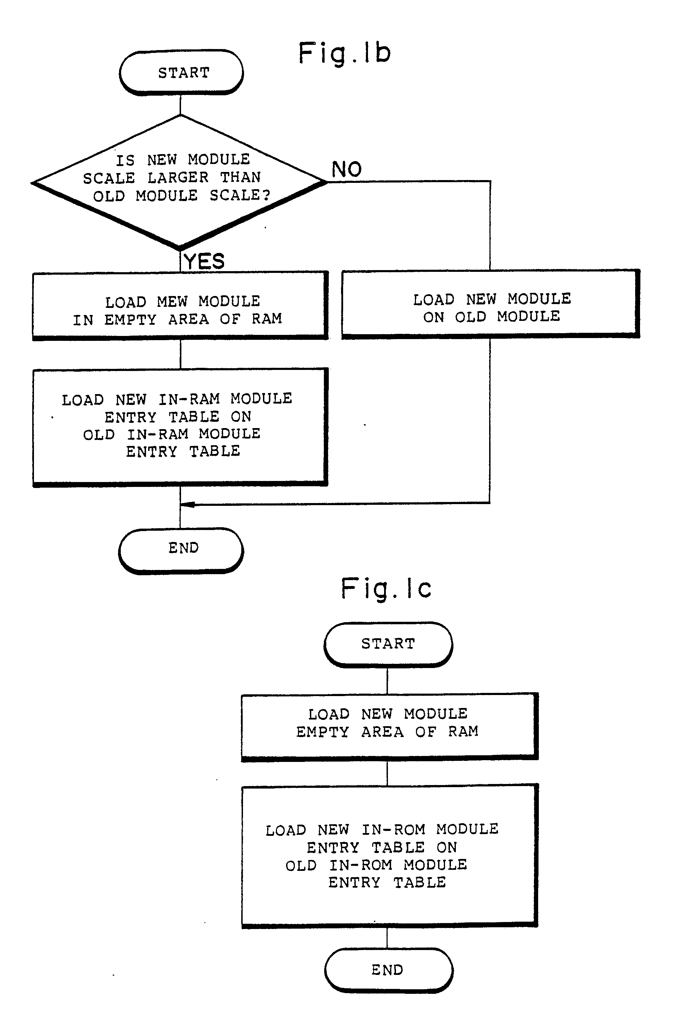

With reference to Fig. 1b, the operation of loading an object program composed of in-RAM modules stored in the area 84 of the RAM 8 from the host computer 10 will be described hereinbelow. When the CPU 1 determines that an object program is transferred from the host computer 10 via the communication line 9 and the communication interface 6, an operator checks whether the scale of a new project program module transferred is larger than that of the old module stored in the in-RAM module area 84 of the RAM 8.

If NO; that is, when the scale of the new module is smaller than that of the old module, the new module is loaded in the in-RAM module area 84. However, if YES; that is, when the scale of the new module is larger than that of the old module, since the area 84 is not sufficient, the new module is loaded in the empty area 85. Thereafter, CPU 1 loads the in-RAM module entry table indicating a jump address of the empty area 85 in which the new module is loaded on the old in-RAM module entry table 83.

With reference to Fig. 1c, the operation of changing the module of the object program stored in the ROM 7 will be described hereinbelow. In this case, since it is impossible to rewrite an object program in the ROM 7 as with the case of the RAM 8, when the in-ROM module entry table 71 in the ROM 7 is required to be changed, CPU 1 loads a new module transferred from the host computer 10 in the empty area 85 of the RAM 8. Further, CPU 1 loads a new in-ROM module entry table transferred from the host computer 10 in the area 82. This entry table 82 is copied to the in-ROM module entry table 81 at ICL and/or ACL. Thereafter, CPU 1 executes transaction processing on the basis of the new in-ROM module loaded in the empty area 85 with reference to the in-ROM module entry table 81.

As described above, in the method of changing an object program according to the present invention, whenever a program module required to be changed is inputted to a CAT from outside, since a new module is written in the RAM in place of an old module and further an address of the new module to be jumped is written in a table, it is possible to simply rewrite a part of object program in a short time.

Further, when a module stored in the ROM is required to be changed, since the new module and a table indicating the jump address of the new module are both loaded in the RAM in the same way as with the changed module stored in the RAM, it is possible to change a part of an object program without replacing the ROM with a new one whenever the object program is required to be changed.

## Claims

1. A method of changing an object program, to change any given program module from outside, when an object program including a plurality of modules is loaded in a RAM, which comprises the steps of:

(a) preparing in the RAM a table for storing each of addresses of the modules to be jumped;

(b) writing a new module at the RAM, instead of an old module written in the same RAM, whenever the new module to be changed is inputted from outside; and

(c) writing an address of the new module to be jumped in the table of the RAM.

2. A method of changing an object program, to change any given module from outside, when an object program including a plurality of modules and a table for designating each of addresses of the modules to be jumped are stored in a ROM, which comprises the steps of:

(a) preparing a RAM having a first area for loading the same table as in the table loaded in the ROM and a second area for loading a new module;

(b) transferring contents stored in the table of the ROM to the first area for table of the RAM, whenever power is turned on;

(c) designating an address of a module loaded in the ROM on the basis of the transferred table stored in the RAM;

(d) loading a new module in the second area of the RAM, whenever the new module to be changed is inputted from outside; and

(e) loading the table for designating an address of the new module to be jumped into the first area of the RAM.

# Fig. 1a

```
                    ┌─────────────────────┐
                    │      POWER ON       │
                    └─────────────────────┘
                              │
                  ┌───────────────────────┐
                  │   COPY IN-ROM MODULE   │
                  │    ENTRY TABLE 71 TO   │
                  │      IN-ROM MODULE     │
                  │     ENTRY TABLE 81     │
                  │         OF RAM         │
                  └───────────────────────┘
                              │
                  ┌───────────────────────┐
                  │   PROCESS TRANSACTION  │
                  │    WITH REFERENCE TO   │
                  │      IN-ROM MODULE     │
                  │     ENTRY TABLE 81     │
                  └───────────────────────┘
                              │
                             ╱ ╲
                            ╱   ╲
                  ┌────────╱     ╲────────┐
                  │  IS IN-RAM OBJECT      │  NO
                  │  PROGRAM NORMAL?       │ ────────┐
                  └────────╲     ╱────────┘          │
                            ╲   ╱                    │
                             ╲ ╱                     │
                           YES │                     │
        ┌───────────────────────┐     ┌───────────────────────┐
        │      LOAD IN-ROM       │     │  LOAD OBJECT PROGRAM   │
        │    ENTRY TABLE 82      │     │ TO RAM 8 WITH REFERENCE│
        │   TO IN-ROM MODULE     │     │    TO IN-ROM MODULE    │
        │    ENTRY TABLE 81      │     │     ENTRY TABLE 81     │
        └───────────────────────┘     └───────────────────────┘
                  │
        ┌───────────────────────┐
        │   PROCESS TRANSACTION  │
        │    WITH REFERENCE TO   │
        │      IN-ROM MODULE     │
        │     ENTRY TABLE 81     │
        └───────────────────────┘
                  │
```

## Fig.lb

```
        ┌──────────┐
        │  START   │
        └────┬─────┘
             │
        ╱────┴────╲
      ╱  IS NEW     ╲
    ╱  MODULE SCALE   ╲   NO
   ╲  LARGER THAN     ╱ ──────────┐
     ╲ OLD MODULE   ╱             │
       ╲ SCALE?   ╱               │
        ╲───┬───╱                 │
          YES                     │
           │                      │
 ┌──────────────────┐   ┌──────────────────┐
 │ LOAD MEW MODULE  │   │ LOAD NEW MODULE  │
 │ IN EMPTY AREA    │   │  ON OLD MODULE   │
 │    OF RAM        │   │                  │
 └────────┬─────────┘   └────────┬─────────┘
          │                      │
 ┌──────────────────┐            │
 │ LOAD NEW IN-RAM  │            │
 │   MODULE         │            │
 │ ENTRY TABLE ON   │            │
 │ OLD IN-RAM       │            │
 │ MODULE           │            │
 │ ENTRY TABLE      │            │
 └────────┬─────────┘            │
          │◄──────────────────────┘
     ┌────┴─────┐
     │   END    │
     └──────────┘
```

## Fig.lc

```
        ┌──────────┐
        │  START   │
        └────┬─────┘
             │
 ┌──────────────────┐
 │ LOAD NEW MODULE  │
 │ EMPTY AREA OF RAM│
 └────────┬─────────┘
          │
 ┌──────────────────┐
 │ LOAD NEW IN-ROM  │
 │   MODULE         │
 │ ENTRY TABLE ON   │
 │ OLD IN-ROM       │
 │ MODULE           │
 │ ENTRY TABLE      │
 └────────┬─────────┘
          │
     ┌────┴─────┐
     │   END    │
     └──────────┘
```

## Fig. 2

```
KEYBOARD  2 ────┐
                │
                ├──── CPU  1 ────┬──── DISPLAY UNIT  4
CARD READER 3 ──┘                │
                                 ├──── PRINTER  5
                                 │
                                 ├──── INTERFACE  6 ──── 9 ──── HOST COMPUTER  10
                    ┌────┴────┐
                 ROM  7    RAM  8
```

## Fig. 3a

```
┌─────────────────────────────────┐
│ IN-ROM MODULE ENTRY TABLE    71 │
├─────────────────────────────────┤
│                                 │
│                                 │
│       IN-ROM MODULE AREA     72 │
│                                 │
│                                 │
│                                 │
└─────────────────────────────────┘   7
```

## Fig. 3b

```
┌─────────────────────────────────┐
│   IN-ROM MODULE                 │
│   ENTRY TABLE                81 │
├─────────────────────────────────┤
│   IN-ROM MODULE                 │
│   ENTRY TABLE                82 │
├─────────────────────────────────┤
│   IN-RAM MODULE                 │
│   ENTRY TABLE                83 │
├─────────────────────────────────┤
│   IN-RAM MODULE                 │
│   AREA                       84 │
├─────────────────────────────────┤
│                                 │
│   EMPTY AREA                 85 │
└─────────────────────────────────┘   8
```